# NEUE EUROPÄISCHE PATENTSCHRIFT

(11) **EP 1 565 755 B2**
(45) Veröffentlichungstag und Bekanntmachung des Hinweises auf die Entscheidung über den Einspruch: **05.07.2023**
(45) Hinweis auf die Patenterteilung: 28.04.2010
(21) Anmeldenummer: 03795827.9
(22) Anmeldetag: 19.11.2003
(51) Int. Cl.: G01P 3/481

(54) **POSITIONSDETEKTOR**
POSITION DETECTOR
DETECTEUR DE POSITION

(30) Priorität: 20.11.2002 DE 10254231; 17.12.2002 DE 10259223
(43) Veröffentlichungstag der Anmeldung: 24.08.2005
(73) Patentinhaber: Avago Technologies International Sales Pte. Limited, Singapore 768923 (SG)
(72) Erfinder: Mehnert, Walter, 85521 Ottobrunn (DE); Theil, Thomas, 85258 Weichs (DE)
(74) Vertreter: Kilian Kilian & Partner
(86) Internationale Anmeldenummer: PCT/EP2003/012938
(87) Internationale Veröffentlichungsnummer: WO 2004/046735

(56) Entgegenhaltungen:
- EP-A1- 0 484 716
- EP-A1- 0 893 668
- WO-A-99/54685
- DE-A- 3 118 768
- DE-A1- 4 038 284
- DE-A1- 4 233 549
- DE-A1- 4 440 214
- DE-A1- 19 543 562
- DE-A1- 19 847 328
- US-A- 6 084 400
- PATENT ABSTRACTS OF JAPAN vol. 014, no. 267 (P-1058), 8. Juni 1990 (1990-06-08) -& JP 02 074817 A (NIPPON STEEL CORP), 14. März 1990 (1990-03-14)
- "Magnetische Sensoren Position, Weg, Abstand, Drehzahl, Drehwinkel", Vacuumschmelze GmbH
- "Wiegand-Sensoren für Weg- und Geschwindigkeitsmessungen", Technisches Messen, 51. Jahrgang 1984, Heft 4
- "Simple Sensors That Need No Power", Machine Design, 26 April 1997(S. 155 ff)
- "Der Wiegand-Draht, ein neuer magnetischer Sensor",Regelungstechnische Praxis 22 Jahrgang 1980, Heft 3

## Beschreibung

Die Erfindung betrifft einen Positionsdetektor für das Erfassen von rotatorischen Bewegungen unter Verwendung eines ferromagnetischen Elementes.

Solche ferromagnetischen Elemente sind wie in der US 4,364,013 als so genannte Impulsdraht-Bewegungsmelder oder wie in der DE 41 07 847 C1 oder in der DE 28 17 169 C2 als Wiegand-Sensoren bekannt, bei denen z. B. ein Impulsdraht aus ferromagnetischem Material von einer Sensorspule umwickelt ist. Die im ferromagnetischen Material zunächst unregelmäßig orientierten magnetischen Bereiche - als magnetische Domänen oder auch als Weißsche Bereiche bezeichnet - richten sich unter dem Einfluss äußerer Kräfte zu einer einzigen Domäne aus. Beim Anlegen eines äußeren Magnetfeldes von bestimmter Richtung und Größe "klappt" diese Domäne "schlagartig" um, was zu einem als Ausgangssignal abnehmbaren Spannungsimpuls in der Sensorspule führt.

Bei einer bekannten Ausbildung als Drehwinkelsensor, vgl. z. B. EP 0 724 712 B1, werden an solchen mehrfach über den Umfang verteilten Impulsdrähten Schalt- und Rücksetzmagnete vorbeigeführt, so dass die Impulsdrähte nacheinander von Magnetfeldern umgekehrter Polarität durchsetzt werden. Hierbei erzeugt jeder Impulsdraht durch das Ummagnetisieren aller seiner magnetischen Bereiche in seiner Sensorspule einen Spannungsimpuls von definierter Länge, Amplitude und Polarität. Diese Spannungsimpulse werden in einer elektronischen Zählschaltung ausgewertet. Über die Rücksetzmagnete werden die magnetischen Bereiche der Impulsdrähte jeweils über das entgegengesetzt gepolte Rücksetzfeld in den Ausgangszustand zurückgebracht, so dass der jeweilige Impulsdraht für eine neue Impulsauslösung bereit ist. Diese Vorgehensweise ist als asymmetrischer Betrieb bekannt. Im symmetrischen Betrieb wird zusätzlich auch bei jedem Rücksetzvorgang ein auswertbarer Impuls erzeugt.

Wie in der eingangs genannten EP 0 724 712 B1 ausgeführt, kann mit mindestens zwei solcher über den Umfang in Bewegungsrichtung verteilten Sensoren nicht nur jede volle Umdrehung einer Drehwelle sondern auch deren Drehrichtung unter Berücksichtigung der charakteristischen Positionsdifferenzen zwischen Setz- und Rücksetzvorgang unter eindeutiger Zuordnung der erzeugten Spannungsimpulse auf die jeweilige Winkellage der Drehwelle geschlossen werden.

Wegen der mindestens zwei über den Umfang verteilten Sensoren ist mit einem erheblichen baulichen Aufwand zu rechnen, denn die Impulsdrahtsensoren sind nicht beliebig klein, so dass z. B. Umdrehungszähler mit kleinem Durchmesser nicht zu realisieren sind. Außerdem sind diese Sensoren relativ teuer.

Es ist ferner bekannt, bei einem solchen Positionsdetektor mit Hilfe eines einzigen Sensors Umdrehung und Umdrehungsrichtung einer Welle festzustellen, indem der als Wieganddraht ausgebildete Sensor für die bewegungsrichtungsabhängige Impulserzeugung zur Bewegungsrichtung eines dem Wieganddraht gegenüberliegenden Abschnitts mit magnetischer Polarität geneigt ist; vgl. die genannte DE 28 17 169 C2.

Nachteilig bei einer solchen Anordnung ist, dass infolge der vorgebbaren Polarisierung zwar eine Drehrichtungserkennung erfolgen kann, diese aber auf die durch die Polarisierung vorgegebene Drehrichtung, also immer nur auf eine einzige Drehrichtung, beschränkt ist.

Für das Erfassen beider Drehrichtungen einer Welle sind dann ebenfalls mindestens zwei solcher Sensoren mit den zugehörigen Auswerteschaltungen nötig. Darüber hinaus haftet einer solchen Anordnung unter Umständen der Nachteil einer sehr geringen Energieausbeute an, da der Winkel zwischen Bewegungsrichtung und Ausrichtung der Sensoren eine entscheidende Rolle spielt. Ein Arbeiten ohne Energiezufuhr von Außen ist daher bei einer solchen Anordnung schwierig.

Hier Abhilfe zu schaffen ist Aufgabe der Erfindung.

Ausgehend von der Tatsache, dass in ferromagnetischen Materialien die Wechselwirkung der magnetischen Momente benachbarter Atome mit unterschiedlicher Magnetisierungsrichtung sehr stark ist, was zur Ausrichtung der Momente in kleinen Raumbereichen, den so genannten Weißschen Bezirken, führt, die durch als Blochwände bezeichnete Übergangsschichten voneinander getrennt sind, ist es nun möglich durch, z. B. mechanische Streckung eines ferromagnetischen Drahtes, eine einzige Domäne einheitlicher Magnetisierungsrichtung dauerhaft auszubilden. Wird eine solche Domäne in ein äußeres magnetisches Feld bestimmter Größe und Richtung gebracht, dann klappt diese Domäne nicht als Ganzes um, sondern ihre Elementarmagnete klappen von einer bestimmten Ausgangsposition aus - vorzugsweise einem Drahtende - dominoartig in Richtung des äußeren Magnetfeldes. Dies führt zu einer Umklappwelle endlicher Geschwindigkeit in dem ferromagnetischen Element, die aber groß gegenüber der Geschwindigkeit des erregenden Magneten ist, so dass von einem "schlagartigen Umklappen" dieser Domäne gesprochen werden darf.

Unter Ausnutzung der vorstehend geschilderten physikalischen Zusammenhänge ist die eingangs genannte Aufgabe für einen mindestens einen Erregermagneten aufweisenden Positionsdetektor der hier in Frage stehenden Art erfindungsgemäß gelöst mit einem einzigen ferromagnetischen Element mit mindestens einer Induktionsspule und mit mindestens einem zusätzlichen Sensorelement zur Ermittlung von Informationen über die Polarität und die Position des Erregermagneten, wobei diese zum Zeitpunkt der Auslösung des einen ferromagnetischen Elementes als vollständige Informationen zur Bestimmung der Bewegungsrichtung des Erregermagneten zur Verfügung stehen.

Der Effekt der über das ferromagnetische Element laufenden Blochwand wird bei einer besonders einfachen Variante der Erfindung in der Weise benutzt, dass die Ermittlung der Position des Erregermagneten mittels Bestimmung der Auslöserichtung der von beiden Stirnseiten aus initiierbaren Ummagnetisierung des ferromagnetischen Elementes erfolgt.

Die Auslöserichtung der Ummagnetisierung darf hierbei aber nicht verwechselt werden mit der Richtung der Ummagnetisierung selbst, die dadurch beschrieben wird, von welchem Magnetpol zu welchem Magnetpol die Weißschen Bezirke "umklappen", Die Richtung der Ummagnetisierung führt im vorliegenden Falle zur Polarität des auslösenden Poles des Erregermagneten.

Die kinetische Energie der in Form einer fortlaufenden Welle in Richtung des äußeren Feldes umklappenden Elementarmagnete ist groß genug, um aus der dem ferromagnetischen Element zugeordneten Spule nicht nur elektrische Energie für einen Signalimpuls, sondern auch für eine Zählelektronik und eine Hall-Sonde zu entnehmen.

Ist die aktuelle Position und Polarität des Erregermagneten EM gegeben und setzt man diese in Relation zu seiner letzten abgespeicherten Position und Polarität, dann besitzt man vollständige Informationen zur Ermittlung der Bewegungsrichtung des Erregermagneten EM und der mit diesem fest verbundenen Drehwelle.

Zum besseren Verständnis der Erfindung sei nachfolgend diese am Beispiel eines Umdrehungszählers erläutert.

Im allgemeinen Fall, der gekennzeichnet ist durch einen Erregermagneten und der Auflösung von ½ Umdrehung, ist das Umdrehungszählersystem durch vier kombinierbare Erregermagnetgrundzustände in Verbindung mit seinen letzten abgespeicherten Daten vollständig beschrieben, nämlich
Z1.) Nordpol rechts von der Bezugslinie
Z2.) Nordpol links von der Bezugslinie
Z3.) Südpol rechts von der Bezugslinie
Z4.) Südpol links von der Bezugslinie

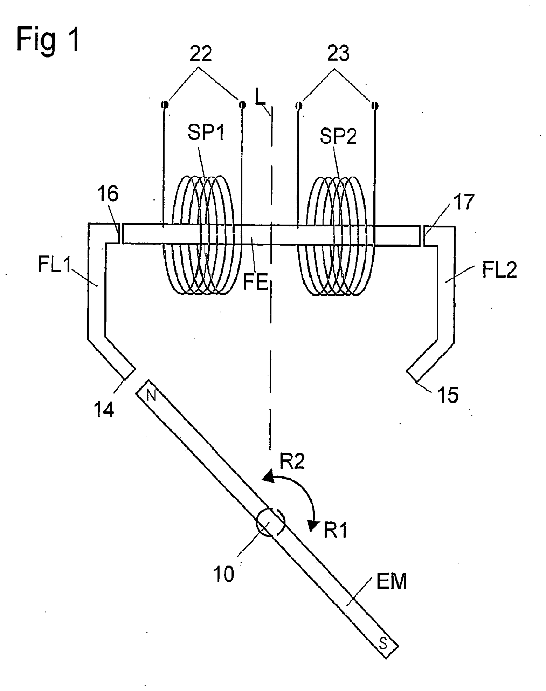

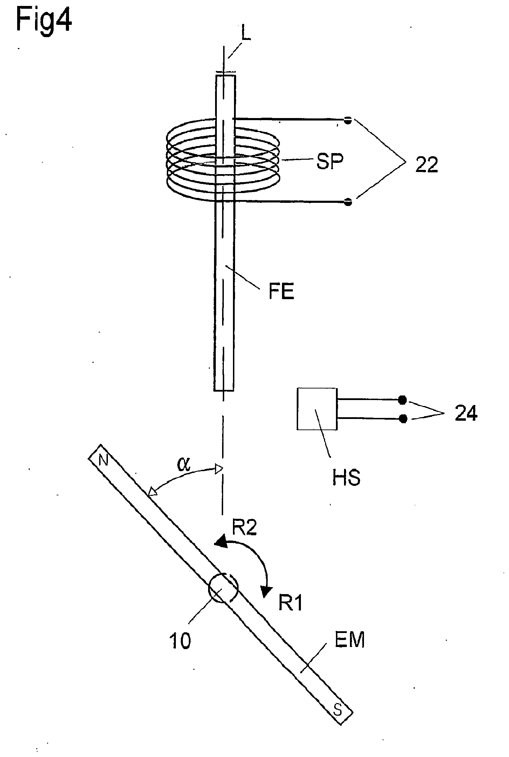

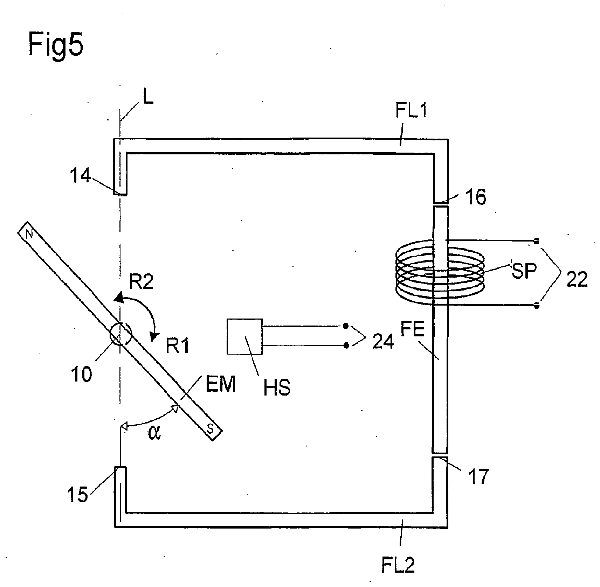

Bei der erfindungsgemäßen Verwendung von nur einem Impulsdraht und einer Induktionsspule führen diese vier Zustände je nach Verwendung der Auslöserichtung der Ummagnetisierung zu drei Zweiergruppen von kombinierten Zuständen:
1.) Gruppe: Beide Auslöserichtungen der Ummagnetisierung sind definiert; siehe Fig. 1, 2 und 3.
   a.) Nordpol rechts oder Südpol links von der Bezugslinie L (Z1 oder Z4)
   b.) Nordpol links oder Südpol rechts von der Bezugslinie L (Z2 oder Z3)
   Hier ist die Position des Erregermagneten EM durch die Messung der Auslöserichtung der Ummagnetisierung mittels des zusätzlichen Sensorelementes, z. B. einer zweiten Induktionsspule oder einer Hall-Sonde, bestimmbar. Mit einer zweiten Spule SP2 über dem ferromagnetischen Element FE erfolgt dies direkt, durch eine Hall-Sonde HS indirekt. Bei der Verwendung einer Hall-Sonde HS spielt dabei nicht die von dieser erkannte Polarität des Erregermagneten EM eine Rolle, sondern lediglich die Tatsache, ob sie angeregt wird oder nicht. Die Polarität des Erregermagneten EM kann dann immer durch Messen der Ummagnetisierungsrichtung mittels der Induktionsspule SP1 oder SP des ferromagnetischen Elementes FE aus der Polarität der Spannungsimpulse bestimmt werden.
2.) Gruppe Nur eine Auslöserichtung der Ummagnetisierung ist definiert; siehe Fig. 4.
   a.) Nordpol rechts oder Nordpol links der Bezugslinie L (Z1 oder Z2)
   b.) Südpol rechts oder Südpol links der Bezugslinie L (Z3 oder Z4)
   In diesem Fall ist die Position des Erregermagneten EM immer direkt durch die Hall-Sonde gegeben, indem diese angeregt wird oder nicht. Die Polarität des Erregermagneten EM kann unabhängig davon mittels der Induktionsspule SP durch Messung der Ummagnetisierungsrichtung bestimmt werden.
3.) Gruppe Auslöserichtung der Ummagnetisierung ist nicht definiert; siehe Fig. 5.
   a.) Nordpol rechts von der Bezugslinie L oben oder Südpol rechts von der Bezugslinie Lunten (Z1 oder Z2)
   b.) Nordpol rechts von der Bezugslinie L unten oder Südpol rechts von der Bezugslinie L oben (Z4 oder Z3)
   Je nach Anordnung der Hall-Sonde HS rechts (wie in Fig. 5 eingezeichnet) oder links werden die entsprechenden Polaritäten gewertet. Die Polarität des Erregermagneten EM ist hier unmittelbar durch die Hall-Sonde HS gegeben. Die Bestimmung der Position des Erregermagneten EM (Nordpol bzw. Südpol oben oder unten) erfolgt nunmehr indirekt durch Messung der Ummagnetisierungsrichtung.

Alle Lösungen sind mathematisch äquivalent und technologisch gleichwertig.

Durch die vorstehend erläuterten erfinderischen Maßnahmen ist ein Positionsdetektor mit denkbar einfachstem mechanischem Aufbau realisierbar, der auch bei Geschwindigkeiten gegen Null und Ausfall der regulären Stromversorgung mit nur einem einzigen ferromagnetischen Element in beiden Bewegungsrichtungen des Erregermagneten einwandfrei arbeitet. Beachtenswert ist hierbei, dass zum Zeitpunkt Ts der Auslösung des ferromagnetischen Elementes FE die vollständigen Informationen zur Ermittlung der Polarität und Bewegungsrichtung des Erregermagneten EM zur Verfügung stehen, also neben den abgespeicherten Informationen alle notwendigen Signale an den Ausgangsklemmen der betreffenden Induktionsspulen und/oder der Hall-Sonde. Diese Tatsache als Forderung erzwingt, dass das ferromagnetische Element FE, die Hall-Sonde HS und der Erregermagnet EM bzw. die Erregermagnete in einer ganz bestimmten räumlichen Konstellation zueinander stehen müssen, z. B. an einem Ort.

Die optimal vereinfachte Gestaltung des Positionsdetektors ermöglicht es auch, den Ausgangssignalen der Sensorspule SP bzw. -spulen SP1; SP2 gleichzeitig die Energie für die Auswerteelektronik zu entnehmen, welche zumindest eine Zählvorrichtung, einen nichtflüchtigen Speicher und einen Kondensator umfasst.

Weitere Merkmale der Erfindung ergeben sich aus den abhängigen Ansprüchen.

Die Erfindung ist nachfolgend anhand von fünf in der Zeichnung mehr oder minder schematisch dargestellter Ausführungsbeispiele beschrieben.

Es zeigen:
- Fig. 1: den schematischen Aufbau eines Positionsdetektors gemäß der Erfindung mit einem ferromagnetischen Element, zwei zugeordneten Induktionsspulen und zwei ferromagnetischen Flussleitstücken,
- Fig. 2: den schematischen Aufbau eines Positionsdetektors gemäß einem zweiten Ausführungsbeispiel der Erfindung mit einem ferromagnetischen Element mit einer Induktionsspule, einer Hall-Sonde und zwei ferromagnetischen Flussleitstücken,
- Fig. 3: den schematischen Aufbau eines Positionsdetektors gemäß einem dritten Ausführungsbeispiel der Erfindung mit einem ferromagnetischen Element, mit einer Induktionsspule, einer Hall-Sonde, mehreren Erregermagneten und zwei ferromagnetischen Flussleitstücken,
- Fig. 4: den schematischen Aufbau eines Positionsdetektors gemäß einem vierten Ausführungsbeispiel der Erfindung mit einem ferromagnetischen Element, mit einer Induktionsspule und einer Hall-Sonde,
- Fig. 5: den schematischen Aufbau eines Positionsdetektors gemäß einem fünften Ausführungsbeispiel der Erfindung mit einem ferromagnetischen Element, mit einer Induktionsspule, einer Hall-Sonde und zwei über 180° angeordneten ferromagnetischen Flussleitstücken,
- Fig. 6: ein Blockschaltbild einer für die Ausführungsformen gemäß Fig. 1 bis 5 geeigneten Auswerteelektronik,

- Fig. 7: eine Anordnung eines Positionsdetektors entsprechend Fig. 5, bei dem die Drehachse des Erregermagnets um 90° gedreht, also entsprechend Fig. 4 angeordnet ist und
- Fig. 8: eine Anordnung eines Positionsdetektors entsprechend Fig. 7, bei der die Drehachse des Erregermagnets gegenüber der Anordnung nach Fig. 5 um 90° gedreht ist, jedoch zwecks einfacherer Darstellung zwei Erregermagneten aufweist.

Bei der in Fig. 1 gezeigten Ausführungsform eines Positionsdetektors ist der sich bewegende Körper eine Welle 10, die sich in Richtung der Pfeile R1 und R2, also im Uhrzeiger- oder im Gegenuhrzeigersinn, drehen kann. Um die Drehungen der Welle 10 zählen zu können, ist dieser ein einen Nordpol N und einen Südpol S aufweisender Erregermagnet EM zugeordnet. Über die ferromagnetischen Flussleitstücke FL1 und FL2, deren Enden 14 und 15 auf dem vom Erregermagneten EM beschriebenen Kreisbogen liegen und deren Enden 16 (Position links von der Bezugslinie L am FE) und 17 (Position rechts von der Bezugslinie L am FE) den Stirnseiten eines ferromagnetischen Elements FE zugewandt sind, kann das ferromagnetische Element FE durch das vom Erregermagneten EM erzeugte magnetische Feld beeinflusst werden.

Das parallel zur Bewegungsrichtung des Erregermagneten ausgerichtete ferromagnetische Element FE ist von zwei Sensorspulen SP1 und SP2 umgeben, an deren Ausgangsklemmen 22 und 23 die beim Passieren des Erregermagneten EM infolge Ummagnetisierung des ferromagnetischen Elementes FE erzeugten Spannungsimpulse entsprechender Polarität abnehmbar sind. Als zusätzliches Sensorelement zur Ermittlung der Auslöserichtung der Ummagnetisierung dient hier die zweite Induktionsspule SP2. Aus dem zeitlichen Versatz der Spannungsmaxima der beiden Spulen ist die Auslöserichtung der Ummagnetisierung und damit die Position des Erregermagneten EM gegeben. Streng genommen braucht dabei nur die Spule mit logisch "1" ausgewertet werden, die als erstes ihr Spannungsmaxima erreicht. Die andere Spule hat zu diesem Zeitpunkt ihr Maxima noch nicht erreicht und wird daher mit logisch "0" bewertet. Als ferromagnetisches Element dient hier ein Impulsdraht.

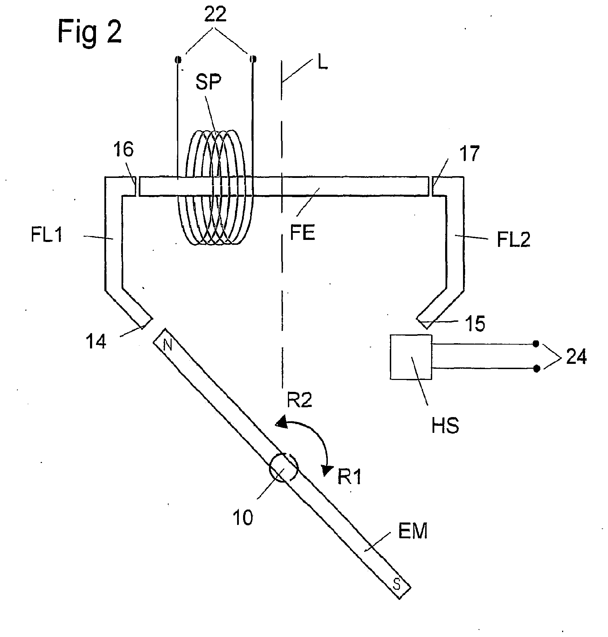

In der Ausführungsform nach Fig. 2 tragen einander entsprechende Elemente gleiche Bezugsziffern wie bei der Ausführungsform nach Fig. 1.

Unterschiedlich zu Fig. 1 ist jedoch, dass dem ferromagnetischen Element FE lediglich eine Sensorspule SP zugeordnet ist. Zwecks Feststellung der Position des Erregermagneten bei der Passage des ferromagnetischen Elementes ist hier als zusätzliches Sensorelement eine Hall-Sonde HS vorgesehen, an deren Ausgang 24 entweder ein Signal abnehmbar ist oder nicht. Die Polarität wird hier wie bei Fig. 1 durch die Spule SP des ferromagnetischen Elementes FE bestimmt. Die von der Hall-Sonde HS festgestellte Polarität ist für die Auswertung ohne Belang, kann jedoch als redundante Information für eine Funktionsüberwachung verwendet werden.

Die zum Zeitpunkt Ts zur Verfügung stehenden vollständigen Informationen zur Ermittlung der Polarität und Bewegungsrichtung des Erregermagneten bestehen daher aus den Daten im nichtflüchtigen Speicher mit den Signalen an den Ausgangsklemmen der Induktionspulen oder mit den Signalen an den Ausgangsklemmen der Induktionsspule und den Ausgangsklemmen der Hall-Sonde.

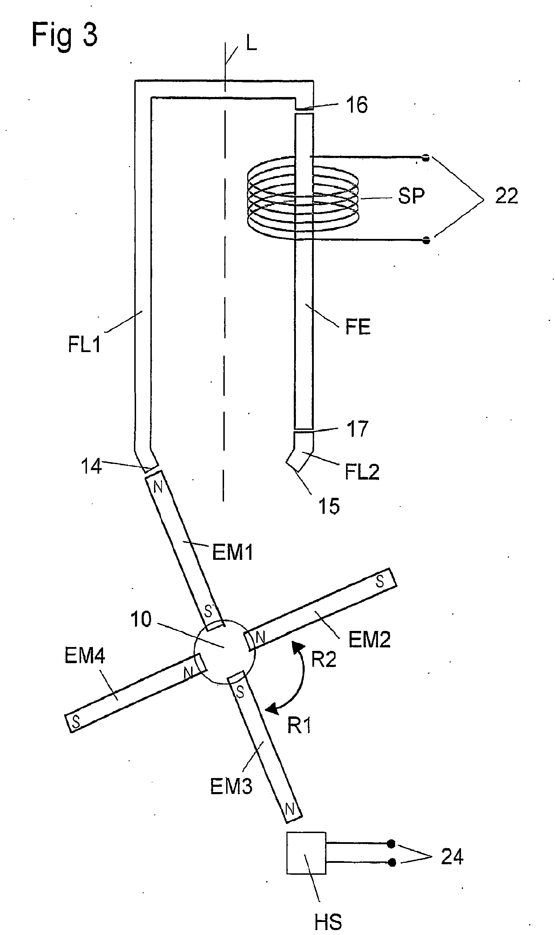

Die Ausführungsform des Positionsdetektors nach Fig. 3 weist die zu den vorstehend beschriebenen Ausführungsbeispielen entsprechenden Elemente auf, jedoch sind der Welle 10 zur Erhöhung der Auflösung vier rechtwinklig zueinander angeordnete Erregermagnete EM1 bis EM4 zugeordnet, und zwar mit wechselnder Polarität. Auf diese Weise wird beim Drehen der Welle 10 den Stirnseiten des ferromagnetischen Elementes FE über die Flussleitstücke FL1 und FL2 wechselweise ein Nord- bzw. ein Südpol gegenüberstehen. Die notwendige Hall-Sonde zur Bestimmung der Position des Erregermagneten ist hier den abgewandten Enden der Erregermagnete EM1 bis EM4 zugeordnet.

Die Ausführungsform des Positionsdetektors nach Fig. 4 weist die zu den vorstehend beschriebenen Ausführungsformen entsprechenden Elemente auf, jedoch sind hier keine Flussleitstücke vorhanden. Bei dieser Variante wird vor allem von der Tatsache Gebrauch gemacht, dass das ferromagnetische Element FE bereits ausgelöst wird, bevor der Erregermagnet EM in einer Linie mit dem ferromagnetischen Element FE steht. Der Sichtbereich der für die Positionsbestimmung des Erregermagneten EM notwendigen Hall-Sonde HS ist so abgestimmt, dass er etwa bis zur Bezugslinie L reicht.

Die Ausführungsform des Positionsdetektors nach Fig. 5 weist ebenfalls die zu den vorstehend beschriebenen Ausführungsformen entsprechenden Elemente auf, jedoch sind hier die dem Erregermagneten gegenüberstehenden Enden der Flussleitstücke FL1 und FL2 über 180° angeordnet. Die für die Ermittlung der Polarität des Erregermagneten als zusätzliches Sensorelement notwendige Hall-Sonde ist hier rechtwinklig zur Bezugslinie L durch den Drehpunkt der Welle 10 so angeordnet, dass sie die entsprechenden Pole des Erregermagneten EM noch sieht, wenn das ferromagnetische Element auslöst wird. Dies erfolgt immer in einem bestimmten Winkel α vor dem Eintauchen in die Flussleitstücke. Die Position des Erregermagneten EM wird mittels der Spule des ferromagnetischen Elementes FE durch Messen der Ummagnetisierungsrichtung bestimmt. Die vorliegende Variante nach Fig. 5 kommt mit dem kleinstmöglichen Erregermagneten EM aus, insbesondere wenn die vorgesehenen Flussleitstücke auch zur Flussbündelung in Form einer magnetischen Linse eingesetzt werden.

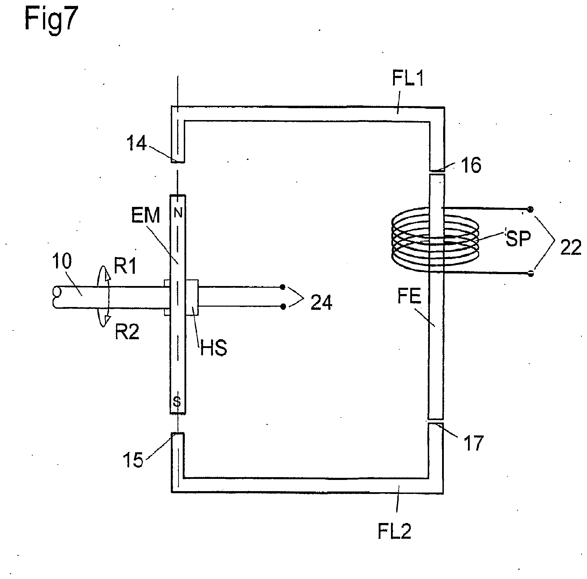

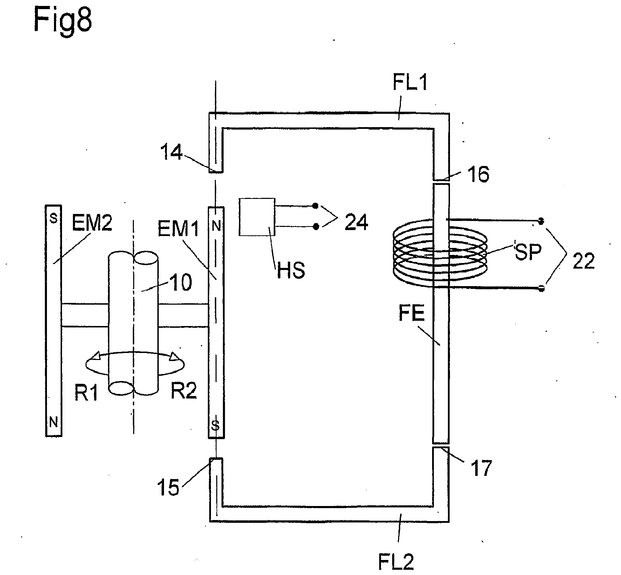

In den Ausführungsbeispielen gemäß Fig. 1 bis 5 sind jeweils Ausführungsformen gezeigt, bei denen der Erregermagnet EM und das ferromagnetische Element FE in einer Ebene bezogen auf die Drehachsennormale liegen. Selbstverständlich ist es möglich und unter Umständen sogar vorteilhaft, das ferromagnetische Element FE und den Erregermagneten EM in getrennten Ebenen - wie in Fig. 7 dargestellt - oder in einer Ebene, aber parallel zur Drehachsennormale - wie in Fig. 8 dargestellt - anzuordnen.

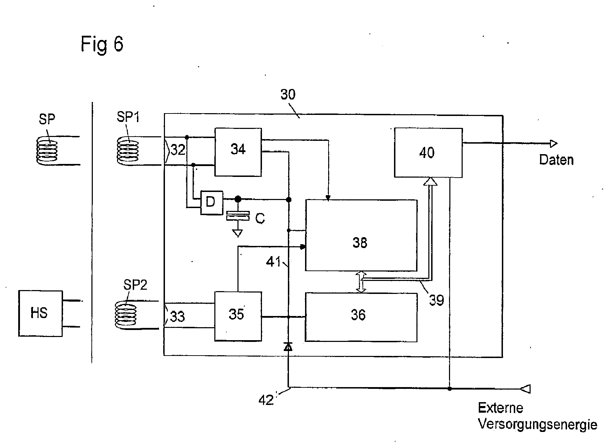

Den Positionsdetektoren gemäß Fig. 1 bis 5 sowie 7 und 8 ist jeweils eine insgesamt mit der Bezugsziffer 30 bezeichnete, in Fig. 6 als Blockschaltbild dargestellte, Auswerteelektronik zugeordnet, deren Eingangsklemmen 32 bzw. 33 mit den Sensorspulen SP1 und SP2 bzw. mit SP und mit der Hall-Sonde HS verbunden sind. Den Eingangsklemmen ist jeweils eine Erkennungslogik 34 und 35 nachgeschaltet. Dem Eingang 32 ist über einen Gleichrichter D zusätzlich ein Kondensator C für die Energieversorgung zugeschaltet. Die Signale aus den Erkennungslogiken 34 und 35 werden in einem Zähler 38 ausgewertet, dem ein nichtflüchtiger Speicher 36 zugeordnet ist. Dabei wird unter Einbeziehung der in den eingespeicherten Daten enthaltenen Vorgeschichte und der von den Erkennungslogiken 34 und 35 gelieferten Informationen über die aktuelle Position und Polarität des Erregermagneten ein neuer Zählerstand gewonnen, der dann in den nichtflüchtigen Speicher, der im allgemeinen ein FRAM darstellt, übertragen wird.

Die Energieversorgung für die Auswerteelektronik erfolgt in der Regel aus den Signalen der Induktionsspulen SP, SP1 und SP2. Wenn nur eine Induktionsspule SP verwendet wird, dann erfolgt die Energieversorgung der Hall-Sonde ebenfalls durch diese Spule.

Die Leitungsverbindung 41 ist Teil der Spannungsversorgung der vorstehend beschriebenen Auswerteelektronik. Über die Abgriffe 39 und eine Schnittstelle 40 können die Daten abgenommen werden. Eine Leitung 42 dient - falls vorgesehen - der Energieversorgung von außen, insbesondere dann, wenn zusätzlich zum FRAM ein EEPROM zur Anwendung gelangt. Ein solches EEPROM versetzt die Auswerteelektronik in den meisten Fällen in die Lage, bis zu höchsten Temperaturen zu arbeiten, weil dann z. B. auch wichtige Konfigurationsdaten in einem FRAM schon nach kurzer Zeit verloren gehen würden.

Allen vorstehend beschriebenen Ausführungsbeispielen gemeinsam ist, dass Drehung und/oder Drehrichtung der Welle 10 exakt erfassbar sind mit Hilfe eines einzigen ferromagnetischen Elementes, z. B. eines Impulsdrahtes, der auch genügend Energie sowohl für die Versorgung einer Auswerteelektronik als auch für eine Hall-Sonde als zusätzliches Sensorelement zur Verfügung stellt. Bei der erfindungsgemäßen Anordnung des Impulsdrahtes in der einfachsten Variante, wo beide Enden des Impulsdrahtes messtechnisch gleichwertig sind, sind sowohl die Information über die Position als auch über die Polarität des auslösenden Erregermagneten in den erzeugten Spannungsimpulsen enthalten.

Wesentlich ist auch hier, dass die Informationen über die Auslöserichtung der Ummagnetisierung des ferromagnetischen Elementes, des auslösenden Poles des Erregermagneten EM und dessen gespeicherte letzte Polarität und Position in Bezug auf die sich drehende Welle zum Zeitpunkt Ts der Auslösung des ferromagnetischen Elementes, also gleichzeitig im Rahmen der Ansprechzeiten der verwendeten Elemente, verfügbar sind.

Der Kondensator C in der Auswerteelektronik ist vorgesehen für die Speicherung der aus dem Signalimpuls gewonnenen Versorgungsenergie zumindest solange, bis die Auswertung des Signals und der Abspeichervorgang des Zählerwertes in den nichtflüchtigen Speicher abgeschlossen ist.

Als ferromagnetische Elemente können anstelle von Impulsdrähten oder Wieganddrähten auch andere Elemente verwendet werden, wenn die Bedingungen für das "schlagartige Umklappen" der Weißschen Bezirke gegeben sind.

Um Missverständnisse zu vermeiden sei darauf hingewiesen, dass das ferromagnetische Element FE dadurch charakterisiert ist, dass es - unter Vernachlässigung von Streufeldern - nur einen magnetischen Eingang und einen magnetischen Ausgang hat. Damit ist zwar denkbar, dass es zwischen Eingang und Ausgang beliebig parallel und / oder seriell unterbrochen sein kann, doch wird der erfinderische Gedanke eines einzigen Elementes dadurch nicht verlassen.

Für die Bestimmung der Polarität oder Position des Erregermagneten können anstelle von Hall-Sensoren auch andere Sensoren wie z. B. Feldplatten eingesetzt werden. Ferner ist es möglich, den Erregermagneten so zu präparieren, dass seine Position und/oder Polarität anstelle durch die Hall-Sonde mit Hilfe einer kapazitiven Messung bestimmt werden kann. Darüber hinaus ist der Einsatz des vorstehend beschriebenen Positionsdetektors in Verbindung mit einem Feindrehwinkelsensor in der Form eines so genannten Multiturns möglich, wie dies z. B. in der EP 0 658 745 beschrieben und dargestellt ist. In diesem Falle entspricht die Bezugslinie L dem Nullpunkt des eingesetzten Feindrehwinkelsensors.

Bei Verwendung von z. B. Wiegand-Drähten ist es bei der Synchronisation mit einem Feindrehwinkelsensor notwendig, exakte Aussagen über den Magnetisierungszustand des ferromagnetischen Elementes FE zu erhalten. Dazu ist z. B. die Anordnung nach Fig. 1 mit zwei Spulen geeignet. Mit Hilfe eines in die eine Spule, z. B. die Spule SP1, extern eingespeisten Stromes kann, abhängig von der Magnetisierung des ferromagnetischen Elements FE, in der zweiten Spule, z. B. in der Spule SP2, ein Spannungsimpuls ausgelöst werden. Dieselbe Vorgehensweise ist auch mit zwei übereinander angeordneten Spulen möglich. Des Weiteren ist es auch möglich, die Auslösung mit einem kurzen Stromimpuls oder einer langsam ansteigenden Stromrampe zu erreichen, um dann nur mit einer einzigen Spule SP auszukommen.

### Bezugszeichenliste

- 10: Welle
- 14: Ende
- 15: Ende
- 16: Ende
- 17: Ende
- 22: Ausgangsklemme
- 23: Ausgangsklemme
- 24: Ausgangsklemme
- 30: Auswerteelektronik
- 32: Eingangsklemme
- 33: Eingangsklemme
- 34: Erkennungslogik
- 35: Erkennungslogik
- 36: nichtflüchtiger Speicher
- 38: Zähler
- 39: Abgriffe
- 40: Schnittstelle
- 41: Leitungsverbindung
- 42: Leitung
- α: Auslösewinkel
- C: Kondensator
- D: Gleichrichter
- EM: Erregermagnet
- EM1: Erregermagnet
- EM2: Erregermagnet
- EM3: Erregermagnet
- EM4: Erregermagnet
- FE: ferromagnetisches Element
- FL1: Flussleitstück
- FL2: Flussleitstück
- HS: Hallsonde
- L: Bezugslinie
- N: Nordpol
- R1: Pfeil
- R2: Pfeil
- S: Südpol
- SP: Sensorspule
- SP1: Sensorspule
- SP2: Sensorspule
- SE: Zusätzliches Sensorelement
- Ts: Zeitpunkt der Auslösung des ferromagnetischen Elementes FE
- Z1: Erregermagnetgrundzustand
- Z2: Erregermagnetgrundzustand
- Z3: Erregermagnetgrundzustand
- Z4: Erregermagnetgrundzustand

## Patentansprüche

1. Positionsdetektor für das Erfassen von rotatorischen Bewegungen mit
mindestens einem Erregermagneten (EM),
nur einem ferromagnetischen Element (FE) mit mindestens einer Induktionsspule (SP oder SP1) und mit mindestens einem zusätzlichen Sensorelement (SE)
zur Ermittlung von Informationen über die Polarität und die Position des Erregermagneten (EM), wobei diese zum Zeitpunkt (Ts) der Auslösung des einen ferromagnetischen Elements (FE) als vollständige Informationen zur Bestimmung der Bewegungsrichtung des Erregermagneten (EM) zur Verfügung stehen.

2. Positionsdetektor nach Anspruch 1, **dadurch gekennzeichnet, dass** das ferromagnetische Element (FE) ein Impulsdraht ist.

3. Positionsdetektor nach den Ansprüchen 1 und 2, **dadurch gekennzeichnet, dass** die Induktionsspule (SP oder SP1) zur Messung der Ummagnetisierungsrichtung und im Zusammenhang mit dem zusätzlichen Sensorelement (SE) zur Ermittlung der Auslöserichtung der Ummagnetisierung des ferromagnetischen Elementes (FE) dient.

4. Positionsdetektor nach den Ansprüchen 1 bis 3, **dadurch gekennzeichnet, dass** das zusätzliche Sensorelement (SE) eine zweite Induktionsspule (SP2) über dem ferromagnetischen Element (FE) ist und zur Ermittlung der Auslöserichtung der Ummagnetisierung des ferromagnetischen Elementes (FE) dient.

5. Positionsdetektor nach den Ansprüchen 1 bis 3, **dadurch gekennzeichnet, dass** das zusätzliche Sensorelement (SE) eine Hall-Sonde (HS) zur Messung der Polarität oder Ermittlung der Position des Erregermagneten (EM) ist.

6. Positionsdetektor nach den Ansprüchen 1 bis 5, **dadurch gekennzeichnet, dass** dem ferromagnetischen Element (FE) mindestens ein ferromagnetisches Flussleitstück (FL1 und/oder FL2) zur Flussführung und/oder Flussbündelung zugeordnet ist.

7. Positionsdetektor nach den Ansprüchen 1 bis 6, **dadurch gekennzeichnet, dass** den Signalen der Induktionsspulen (SP, SP1, SP2) zur Positions- und/oder Polaritätserkennung die Energieversorgung für die Auswerteelektronik (30) entnehmbar ist.

8. Positionsdetektor nach den Ansprüchen 1 bis 7, **dadurch gekennzeichnet, dass** die Auswerteelektronik (30) zumindest eine Zählvorrichtung (38), einen nichtflüchtigen Speicher (36) und einen Kondensator (C) umfasst.

9. Positionsdetektor nach den Ansprüchen 1 bis 8, **dadurch gekennzeichnet, dass** der nichtflüchtige Speicher (36) ein FRAM und/oder ein EEPROM ist.

10. Positionsdetektor nach einem oder mehreren der vorhergehenden Ansprüche, **dadurch gekennzeichnet, dass** eine der Spulen (SP / SP1) mit einem externen Stromimpuls beaufschlagbar ist, der entweder zur Auslösung oder zur weiteren Vorspannung des ferromagnetischen Elementes (FE) dient.

## Claims

1. Position detector for detecting rotational movements having
at least one exitation magnet (EM),
only one ferromagnetic element (FE) comprising at least one induction coil (SP or SP1) and at least one additional sensor element (SE)
for obtaining information on the polarity and the position of the exitation magnet (EM), where those are available at the point of time (Ts) of tripping the one ferromagnetic element (FE) as complete information for determining the direction of movement of the exitation magnet (EM).

2. Position detector according to claim 1, **characterized in that** the ferromagnetic element (FE) is a pulse wire.

3. Position detector according to the claims 1 and 2, **characterized in that** the induction coil (SP or SP1) serves for measuring the change of magnetization direction and, in cooperation with the additional sensor element (SE), for determining the tripping direction of the change of magnetization of the ferromagnetic element (FE).

4. Position detector according to the claims 1 to 3, **characterized in that** the additional sensor element (SE) is a second induction coil (SP2) above the ferromagnetic element (FE) and serves for determining the tripping releasing direction of the change of magnetization of the ferromagnetic element (FE).

5. Position detector according to the claims 1 to 3, **characterized in that** the additional sensor element (SE) is a Hall sensor (HS) for measuring the polarity or for evaluating the position of the exitation magnet (EM).

6. Position detector according to the claims 1 to 5, **characterized in that** at least one ferromagnetic flux directing peace (FL1 and or FL2) for directing the flux and/or concentrating the flux is associated to the ferromagnetic element (FE).

7. Position detector according to the claims 1 to 6, **characterized in that** the energy supply for the evaluation electronics (30) is adapted to be taken from the signals of the induction coil (SP, SP1, SP2) for the position and/or polarity detection.

8. Position detector according to the claims 1 to 7, **characterized in that** the evaluation electronics (30) comprises at least a counter device (38), a non-volatile memory (36) and a capacitor (C).

9. Position detector according to the claims 1 to 8, **characterized in that** the non-volatile memory (36) is a FRAM and/or a EEPROM.

10. Position detector according to one or several of the proceeding claims, **characterized in that** one of the coils (SP/SP1) is adapted to be applied with an external current pulse which serves either for tripping or for additional pre-tensioning of the ferromagnetic element (FE).

## Revendications

1. Détecteur de positionnement pour le relèvement des mouvements rotatoires avec
au moins un aimant d'excitation (AE),
un seul élément ferromagnétique (FE) avec au moins une bobine à induction (BI ou BI1) et avec au moins un élément de senseur additionnel (SA)
pour la détermination des informations concernant la polarité et la position de l'aimant d'excitation (AE), étant disponibles au temps (Ts) du déclenchement d'un élément ferromagnétique (FE) comme informations complètes pour la détermination de la direction de mouvement de l'aimant d'excitation (AE).

2. Détecteur de positionnement selon revendication 1 **caractérisé en ce que** l'élément ferromagnétique (FE) est un fil de fer à impulsion.

3. Détecteur de positionnement selon les revendications 1 et 2, **caractérisé en ce que** la bobine à induction (BI ou BI1) sert à la mensuration de la direction du changement de l'aimantation et en connexion avec les éléments additionnels de senseur (SA) pour la détermination de la direction de déclenchement du changement de l'aimantation de l'élément ferromagnétique (FE).

4. Détecteur de positionnement selon les revendications 1 à 3, **caractérisé en ce que** l'élément additionnel de senseur (SA) est une deuxième bobine à induction (BI2) au-dessus de l'élément ferromagnétique (FE) servant à la détermination de la direction de déclenchement du changement de l'aimantation de l'élément ferromagnétique (FE).

5. Détecteur de positionnement selon les revendications 1 à 3, **caractérisé en ce que** l'élément additionnel de senseur (SA) est une sonde de Hall (SH) pour le dimensionnement de la polarité ou pour le relèvement de la position de l'aimant d'excitation (AE).

6. Détecteur de positionnement selon les revendications 1 à 5, **caractérisé en ce qu'à** l'élément ferromagnétique (FE) on attribue au moins une pièce conductrice de flux (CF et/ou CF2) pour la conduction de flux et/ou pour la focalisation de flux.

7. Détecteur de positionnement selon les revendications 1 à 6, **caractérisé en ce que** des signaux des bobines à induction (BI, BI1, BI2) pour la détermination de la position et/ou de la polarité on peut déduire l'approvisionnement énergétique pour l'électronique de l'évaluation (30).

8. Détecteur de positionnement selon les revendications 1 à 7, **caractérisé en ce que** l'électronique de l'évaluation (30) est composée au moins d'un dispositif compteur (38), d'une mémoire non-fugace (36) et d'un condensateur (C).

9. Détecteur de positionnement selon les revendications 1 à 8, **caractérisé en ce que** la mémoire non-fugace (36) est une mémoire FRAM et/ou EEPROM.

10. Détecteur de positionnement selon une ou plusieurs de revendications précédentes, **caractérisé en ce qu'une** de bobines (BI / BI1) peut être renforcée par une impulsion électrique externe qui sert au déclenchement ou à la pré-tension de l'élément ferromagnétique (FE).
